# EUROPEAN PATENT APPLICATION

(11) **EP 3 846 497 A1**
(43) Date of publication of application: **07.07.2021**
(21) Application number: 19855523.7
(22) Date of filing: 30.08.2019
(51) Int. Cl.: H04R 23/00, F03G 7/00, F25B 9/00

(54) **THERMOACOUSTIC DEVICE**

(30) Priority: 31.08.2018 JP 2018164014
(71) Applicant: Kyocera Corporation, Kyoto-shi, Kyoto 612-8501 (JP)
(72) Inventor: NISHIMURA, Michiaki, Kyoto-shi, Kyoto 612-8501 (JP); ONO, Takashi, Kyoto-shi, Kyoto 612-8501 (JP)
(74) Representative: Viering, Jentschura & Partner mbB Patent- und Rechtsanwälte
(86) International application number: PCT/JP2019/034307
(87) International publication number: WO 2020/045675

(57) **Abstract**

A thermoacoustic device includes a waveguide with a loop shape, a heat exchanger, and a thermally conductive member. The waveguide with a loop shape is filled with a medium. The heat exchanger is provided in the waveguide and has a lower temperature part and a higher temperature part that produce a temperature gradient therebetween. The thermally conductive member changes a temperature of a central part of at least one of the lower temperature part and the higher temperature part.

## Description

### Field

A disclosed embodiment(s) relate(s) to a thermoacoustic device.

### Background

A thermoacoustic device has conventionally been known that converts thermal energy into acoustic energy by a thermoacoustic effect that is an interaction between heat and a sound wave(s) and converts the acoustic energy into another energy such as electrical energy.

For example, a thermoacoustic electrical generator is disclosed where a heat storage part that is interposed between a heat release part and a heating part is arranged and provided on a loop pipe that is filled with a gas and an electrical generator that causes pressure oscillation in the gas by a temperature gradient that is produced in the heat storage part and is operated in response to a traveling wave that is produced by the pressure oscillation, so as to execute electrical generation, is provided on the loop pipe (see, for example,

### Patent Literature 1).

### Citation List

### Patent Literature

Patent Literature 1: Japanese Patent Application Publication No. 2003-324932

### Summary

A thermoacoustic device according to an aspect of an embodiment includes a waveguide with a loop shape, a heat exchanger, and a thermally conductive member. The waveguide with a loop shape is filled with a medium. The heat exchanger is provided in the waveguide and has a lower temperature part and a higher temperature part that produce a temperature gradient therebetween. The thermally conductive member changes a temperature of a central part of at least one of the lower temperature part and the higher temperature part.

### Brief Description of Drawings

FIG. 1 is a diagram that illustrates an example of a thermoacoustic device according to an embodiment.
FIG. 2A is a diagram that illustrates an example of a higher temperature part of a heat exchanger and a thermally conductive member that are included in a thermoacoustic device according to an embodiment.
FIG. 2B is a diagram that illustrates an example of a thermally conductive member that is included in a thermoacoustic device according to an embodiment.
FIG. 3 is a diagram that illustrates another example of a thermally conductive member that is included in a thermoacoustic device according to an embodiment.
FIG. 4 is a diagram that illustrates an example of a temperature gradient holding part of a heat exchanger that is included in a thermoacoustic device according to an embodiment.
FIG. 5A is a diagram that illustrates another example of a higher temperature part of a heat exchanger and a thermally conductive member that are included in a thermoacoustic device according to an embodiment.
FIG. 5B is a diagram that illustrates another example of a higher temperature part of a heat exchanger and a thermally conductive member that are included in a thermoacoustic device according to an embodiment.
FIG. 5C is a diagram that illustrates a relationship between a thickness of a fin that composes a higher temperature part of a heat exchanger that is included in a thermoacoustic device according to an embodiment and a thickness of a thermally conductive member therein.
FIG. 5D is a diagram that illustrates a relationship between a width of a fin that composes a higher temperature part of a heat exchanger that is included in a thermoacoustic device according to an embodiment and a width of a thermally conductive member therein.
FIG. 6 is a diagram that illustrates yet another example of a higher temperature part of a heat exchanger and a thermally conductive member that are included in a thermoacoustic device according to an embodiment. Description of Embodiments

Hereinafter, an embodiment(s) of a thermoacoustic device as disclosed in the present application will be explained in detail, with reference to the accompanying drawing(s). Additionally, this invention is not limited by an embodiment(s) as illustrated below.

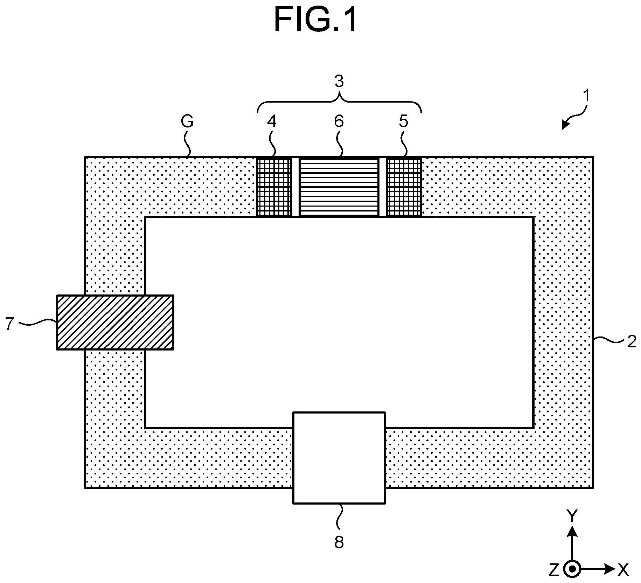

FIG. 1 is a diagram that illustrates an example of a thermoacoustic device 1 according to an embodiment. In a plurality of diagrams that include FIG. 1, a three-dimensional orthogonal coordinate system is illustrated where a near side in a direction that is orthogonal to a plane of paper is a positive direction of a Z-axis direction and a longitudinal direction and a transverse direction of the thermoacoustic device 1 are an X-axis direction and a Y-axis direction, respectively.

The thermoacoustic device 1 according to an embodiment is a device that converts thermal energy into acoustic energy of a sound wave(s) by a thermoacoustic effect, and converts the acoustic energy of a sound wave(s) into another energy such as electrical energy. Herein, such a thermoacoustic effect is an interaction between heat and a sound wave(s). As illustrated in FIG. 1, the thermoacoustic device 1 according to an embodiment includes a waveguide 2, a heat exchanger 3, an exciter 7, and a converter 8.

The waveguide 2 is filled with a gas G. The gas G is, for example, air, nitrogen (N₂), helium (He), argon (Ar), hydrogen (H₂), carbon dioxide (CO₂), or the like. The waveguide 2 seals the gas G in an inside thereof.

A pressure of the gas G that fills the waveguide 2 is, for example, 1 atmosphere (1013.25 hPa) or greater and less than 10 atmospheres (10132.5 hPa). It is possible to improve efficiency of converting thermal energy into acoustic energy of a sound wave(s) by increasing a pressure of the gas G that fills the waveguide 2.

The waveguide 2 is a waveguide with a loop shape and no reflection wall. The waveguide 2 has, for example, a single loop shape as illustrated in FIG. 1. The waveguide 2 causes a sound wave(s) that is/are produced in the gas G to resonate therein. In the thermoacoustic device 1, a phase of a temperature change of the gas G that is caused by thermal conduction between the heat exchanger 3 and the gas G with respect to movement (advection) of the gas G that is caused by a sound wave(s) that is/are produced in the gas G is delayed by one that corresponds to a temperature rise or temperature fall rate of a medium. Accordingly, a phase of a pressure change of a sound wave(s) of the gas G is delayed by 0° to 90° with respect to a phase of a pressure change of the gas G in a case of no temperature change.

Hence, for example, in a case where the waveguide 2 has a reflection wall, an amplitude of a sound wave(s) that is/are produced in the gas G is reduced without stabilizing resonance of a sound wave(s) through a temperature change that is produced in the gas G. In the thermoacoustic device 1 according to an embodiment, the waveguide 2 has a loop shape and no reflection wall, so that it is possible to stabilize resonance of a sound wave(s) that is/are produced in the gas G. Accordingly, it is possible for the thermoacoustic device 1 according to an embodiment to improve an output of acoustic energy of a sound wave(s).

A length of the waveguide 2 is an integral multiple of a wavelength of a sound wave(s) that is/are produced in the gas G. A length of the waveguide 2 is set, for example, in such a manner that a resonance frequency of a sound wave(s) that is/are produced in the gas G is 1 m or less. The waveguide 2 is, for example, a hollow waveguide that has a cross section with a circular shape or a rectangular shape.

The waveguide 2 is formed of, for example, a metal such as a stainless steel (SUS) or a plastic such as vinyl chloride. In a case where the waveguide 2 is formed of a plastic, it is possible to readily manufacture the waveguide 2 with a loop shape, so that it is possible to reduce a cost of the waveguide 2.

The heat exchanger 3 transfers heat to the gas G that fills the waveguide 2. The heat exchanger 3 heats/cools the gas G according to a phase of advection of a sound wave(s). A length of the heat exchanger 3 in a direction where the waveguide 2 extends (an X-axis direction) is, for example, about 1/20 of a wavelength of a sound wave(s) that is/are produced in the gas G, for example, about 5 cm. The heat exchanger 3 is provided in the waveguide 2. The heat exchanger 3 has a lower temperature part 4, a higher temperature part 5, and a temperature gradient holding part 6.

The lower temperature part 4 is a member that holds a relatively low temperature and is included in the heat exchanger 3. The higher temperature part 5 is a member that holds a relatively high temperature and is included in the heat exchanger 3. Herein, such a relatively low temperature and a relatively high temperature are based on a comparison between a temperature of the lower temperature part 4 and a temperature of the higher temperature part 5. That is, a temperature of the higher temperature part 5 is higher than a temperature of the lower temperature part 4. In the heat exchanger 3, a temperature gradient is produced between the lower temperature part 4 and the higher temperature part 5. Configurations of the lower temperature part 4 and the higher temperature part 5 will be described later.

The lower temperature part 4 and the higher temperature part 5 are connected to a heat source with a relatively low temperature and a heat source with a relatively high temperature, respectively. Such a heat source with a relatively low temperature may be, for example, a refrigerant such as water that is supplied to a pipe. Such a heat source with a relatively high temperature may be a heating medium such as hot water that is supplied to a pipe. One of a heat source with a relatively low temperature and a heat source with a relatively high temperature may be, for example, air at a room temperature.

The temperature gradient holding part 6 is a member that holds a temperature gradient that is produced between the lower temperature part 4 and the higher temperature part 5 of the heat exchanger 3. The temperature gradient holding part 6 is provided between the lower temperature part 4 and the higher temperature part 5 of the heat exchanger 3. A gap between the lower temperature part 4 and the temperature gradient holding part 6 and a gap between the temperature gradient holding part 6 and the higher temperature part 5 are, for example, 0.3 mm or less. The temperature gradient holding part 6 produces and amplifies a sound wave(s) in the gas G by a temperature gradient that is produced between the lower temperature part 4 and the higher temperature part 5. A configuration of the temperature gradient holding part 6 will be described later.

The exciter 7 produces a sound wave(s) in the gas G at a predetermined frequency. The exciter 7 is provided to the waveguide 2 so as to seal the gas G therein. In a case where the exciter 7 is provided at a location where a pressure amplitude of a resonant sound wave(s) is large, a piston that is inserted into a cylinder that is provided so as not to change an acoustic impedance of the waveguide 2 is reciprocated, so that a pressure of the gas G is oscillated.

The converter 8 converts acoustic energy of a sound wave(s) that is/are produced in the gas G into predetermined energy and extracts the predetermined energy. The converter 8 may be, for example, an electrical generator that converts acoustic energy of a sound wave(s) that is/are produced in the gas G into electrical energy so as to generate electricity. In such a case, it is possible for the thermoacoustic device 1 to generate electricity by using, for example, heat that is supplied from a heat source to the heat exchanger 3.

Alternatively, the converter 8 may be, for example, a cooler (a heat exchanger for cooling) that converts acoustic energy of a sound wave(s) that is/are produced in the gas G into thermal energy for cooling so as to decrease a temperature of a medium that contacts the converter 8. In such a case, it is possible for the thermoacoustic device 1 to cool a medium by using, for example, heat that is supplied from a heat source to the heat exchanger 3.

In the thermoacoustic device 1 according to an embodiment, for example, the gas G that fills the waveguide 2 is oscillated at a predetermined frequency by the exciter 7. For example, the gas G moves from a lower temperature side to a higher temperature side of the temperature gradient holding part 6 in the heat exchanger 3. Herein, the gas G is heated by a temperature gradient that is held by the temperature gradient holding part 6 so as to expand.

Then, the gas G moves from a higher temperature side to a lower temperature side of the temperature gradient holding part 6 in the heat exchanger 3. Herein, the gas G is cooled by a temperature gradient that is held by the temperature gradient holding part 6 so as to contract. Thus, a sound wave(s) of the gas G that fills the waveguide 2 is/are amplified by repetition of expansion and contraction of the gas G in the heat exchanger 3, so that thermal energy is converted into acoustic energy of a sound wave(s) of the gas G.

Herein, for example, it is possible for the exciter 7 to excite a sound wave(s) that is/are produced in the gas G that fills the waveguide 2, at a predetermined frequency. A sound wave(s) that is/are produced in the gas G resonate(s) in the waveguide 2 so as to be stabilized therein. As a sound wave(s) that is/are produced in the gas G reach(es) the converter 8, it is possible for the converter 8 to convert acoustic energy of a sound wave(s) that is/are produced in the gas G into predetermined energy and extract such predetermined energy.

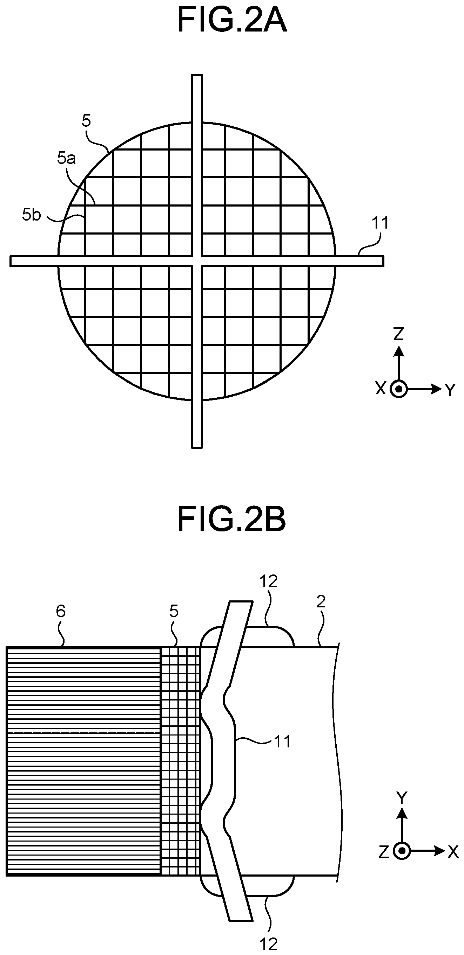

FIG. 2A is a diagram that illustrates an example of a higher temperature part 5 of a heat exchanger 3 and a thermally conductive member 11 that are included in a thermoacoustic device 1 according to an embodiment. FIG. 2B is a diagram that illustrates an example of a thermally conductive member 11 that is included in a thermoacoustic device 1 according to an embodiment.

As illustrated in FIG. 2A, the higher temperature part 5 of the heat exchanger 3 has, for example, a substantially cylindrical shape. A thickness of the higher temperature part 5 of the heat exchanger 3 in a direction of a central axis thereof (an X-axis direction) is, for example, 1 cm or greater and 2 cm or less. The higher temperature part 5 of the heat exchanger 3 has, for example, a plurality of fins 5a, 5b that are orthogonal to a direction of a central axis thereof (an X-axis direction) and are orthogonal to one another. That is, the higher temperature part 5 of the heat exchanger 3 has the fins 5a, 5b with a grid shape.

The plurality of fins 5a, 5b are formed of, for example, a metal. In such a case, it is possible to increase a thermal conductivity of the plurality of fins 5a, 5b. A metal that forms the plurality of fins 5a, 5b is, for example, copper. In such a case, it is possible to reduce a cost of the plurality of fins 5a, 5b. A thickness of the plurality of fins 5a, 5b is, for example, 100 µm or less. A gap between the plurality of fins 5a, 5b is, for example, 0.4 mm or greater and 1.5 mm or less.

A lower temperature part 4 of the heat exchanger 3 has a structure that is identical or similar to a structure of the higher temperature part 5 of the heat exchanger 3.

As illustrated in FIG. 2A and FIG. 2B, the thermoacoustic device 1 according to an embodiment includes a thermally conductive member 11. The thermally conductive member 11 changes a temperature of a central part of the higher temperature part 5 of the heat exchanger 3. The thermally conductive member 11 is connected to, for example, a heat source with a relatively high temperature as described above. The thermally conductive member 11 supplies, for example, heat that is supplied from a heat source with a relatively high temperature to a central part of the higher temperature part 5 of the heat exchanger 3, so that it is possible to raise a temperature of the higher temperature part 5 of the heat exchanger 3.

In a conventional technique, heat is supplied from an outer circumference of a higher temperature part of a heat exchanger. Hence, for example, in a case where a diameter of a waveguide is increased in order to increase an output of acoustic energy of a sound wave(s), it may be difficult to transfer heat to a central part of a higher temperature part of a heat exchanger. Accordingly, it may be difficult to produce a desired temperature gradient between a lower temperature part and a higher temperature part of a heat exchanger.

Hence, in a conventional technique, efficiency of converting thermal energy into acoustic energy of a sound wave(s) may be low. For example, efficiency of converting thermal energy into acoustic energy of a sound wave(s) by a temperature gradient between a temperature of a heat source that is 100 °C or lower and a room temperature may be low.

The thermoacoustic device 1 according to an embodiment includes the thermally conductive member 11 that changes a temperature of a central part of the higher temperature part 5 of the heat exchanger 3, so that heat is not supplied from an outer circumference of the higher temperature part 5 of the heat exchanger 3 and heat is supplied from a central part of the higher temperature part 5 of the heat exchanger 3.

For example, even in a case where a diameter of the waveguide 2 is increased in order to increase an output of acoustic energy of a sound wave(s), it is possible for the thermoacoustic device 1 according to an embodiment to supply heat to a central part through an outer circumference of the higher temperature part 5 of the heat exchanger 3 through the thermally conductive member 11.

Hence, it is possible for the thermoacoustic device 1 to produce a desired temperature gradient between the lower temperature part 4 and the higher temperature part 5 of the heat exchanger 3. Accordingly, it is possible for the thermoacoustic device 1 according to an embodiment to improve efficiency of converting thermal energy into acoustic energy of a sound wave(s).

For example, it is possible for the thermoacoustic device 1 according to an embodiment to produce a temperature gradient between the lower temperature part 4 and the higher temperature part 5 appropriately, even in a case where a heat source with a room temperature and a heat source with a temperature that is 100 °C or lower are connected to the lower temperature part 4 and the higher temperature part 5 of the heat exchanger 3, respectively. Hence, it is possible for the thermoacoustic device 1 to utilize heat from a heat source with a temperature that is 100 °C or lower, for example, waste heat, for, for example, electricity generation or cooling, efficiently.

In the thermoacoustic device 1 according to an embodiment, the thermally conductive member 11 is formed of, for example, a metal. In such a case, it is possible to increase a thermal conductivity of the thermally conductive member 11. A metal that forms the thermally conductive member 11 is, for example, copper. In such a case, it is possible to reduce a cost of the thermally conductive member 11.

As illustrated in FIG. 2A and FIG. 2B, in the thermoacoustic device 1 according to an embodiment, the thermally conductive member 11 is provided so as to be rotationally symmetric with respect to a central axis of the higher temperature part 5 of the heat exchanger 3. In such a case, it is possible for the thermoacoustic device 1 to supply heat to the higher temperature part 5 of the heat exchanger 3 more uniformly. Hence, it is possible for the thermoacoustic device 1 to produce a more uniform temperature gradient between the lower temperature part 4 and the higher temperature part 5 of the heat exchanger 3.

As illustrated in FIG. 2A and FIG. 2B, in the thermoacoustic device 1 according to an embodiment, the thermally conductive member 11 is a member that extends in two directions (for example a Y-axis direction and a Z-axis direction) that are orthogonal to a direction of a central axis of the higher temperature part 5 of the heat exchanger 3 (an X-axis direction) and are orthogonal to one another. That is, the thermally conductive member 11 has a substantially cross shape when viewed from a direction of a central axis of the higher temperature part 5 of the heat exchanger 3 (an X-axis direction).

In such a case, it is possible to supply heat in two directions (for example a Y-axis direction and a Z-axis direction) that are orthogonal to a direction of a central axis of the higher temperature part 5 of the heat exchanger 3 (an X-axis direction) and are orthogonal to one another, uniformly. Hence, it is possible for the thermoacoustic device 1 to simplify a shape of the thermally conductive member 11 and produce a desired temperature gradient between the lower temperature part 4 and the higher temperature part 5 of the heat exchanger 3.

As illustrated in FIG. 2A and FIG. 2B, in the thermoacoustic device 1 according to an embodiment, the thermally conductive member 11 is a member that extends to a center of the higher temperature part 5 of the heat exchanger 3. In such a case, it is possible to supply heat to a central part through an outer circumference of the higher temperature part 5 of the heat exchanger 3 more reliably. Hence, it is possible for the thermoacoustic device 1 to produce a desired temperature gradient between the lower temperature part 4 and the higher temperature part 5 of the heat exchanger 3 more reliably.

As illustrated in FIG. 2A and FIG. 2B, the thermally conductive member 11 is provided so as to contact a surface of the higher temperature part 5 of the heat exchanger 3 on an opposite side of the temperature gradient holding part 6 of the heat exchanger 3 partially. In such a case, it is possible to reduce blocking of movement of a gas G through the higher temperature part 5 of the heat exchanger 3, by the thermally conductive member 11, on a surface of the higher temperature part 5 of the heat exchanger 3.

Hence, it is possible for the thermoacoustic device 1 to further stabilize resonance of a sound wave(s) in the waveguide 2. Accordingly, it is possible for the thermoacoustic device 1 to improve efficiency of converting thermal energy into acoustic energy of a sound wave(s).

As illustrated in FIG. 2B, the thermoacoustic device 1 according to an embodiment includes a heat insulation member 12 that decreases thermal conduction between the thermally conductive member 11 and the waveguide 2 at a position where the thermally conductive member 11 contacts the waveguide 2.

The heat insulation member 12 decreases thermal conduction between the thermally conductive member 11 and the waveguide 2, so that it is possible to increase a thermal conductivity between the thermally conductive member 11 and the higher temperature part 5 of the heat exchanger 3. Hence, it is possible for the thermally conductive member 11 to supply heat to the higher temperature part 5 of the heat exchanger 3 more efficiently. Accordingly, it is possible for the thermoacoustic device 1 to produce a temperature gradient between the lower temperature part 4 and the higher temperature part 5 of the heat exchanger 3 more efficiently.

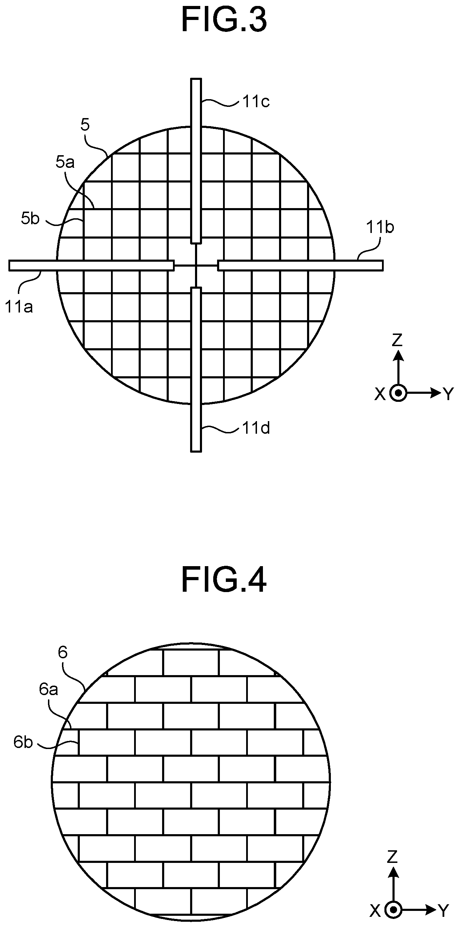

FIG. 3 is a diagram that illustrates another example of thermally conductive members 11a, 11b, 11c, 11d that are included in a thermoacoustic device 1 according to an embodiment. As illustrated in FIG. 3, the thermally conductive members 11a and 11b are members that extend in a first direction (for example, a Y-axis direction) that is orthogonal to a direction of a central axis of a higher temperature part 5 of a heat exchanger 3 (an X-axis direction). The thermally conductive members 11c and 11d are members that extend in a second direction (for example, a Z-axis direction) that is orthogonal to a direction of a central axis of the higher temperature part 5 of the heat exchanger 3 (an X-axis direction) and a first direction (for example, a Y-axis direction).

As illustrated in FIG. 3, the thermally conductive members 11a, 11b, 11c, 11d are arranged so as to surround a center of the higher temperature part 5 of the heat exchanger 3. Similarly to a thermally conductive member 11 as illustrated in FIG. 2A and FIG. 2B, it is also possible for the thermally conductive members 11a, 11b, 11c, 11d to change a temperature of a central part of the higher temperature part 5 of the heat exchanger 3. Hereinafter, the thermally conductive members 11a, 11b, 11c, 11d will collectively be described as a thermally conductive member 11.

Although the thermoacoustic device 1 according to an embodiment includes the thermally conductive member 11 that changes a temperature of a central part of the higher temperature part 5 of the heat exchanger 3, the thermoacoustic device 1 may include a thermally conductive member that changes a temperature of a central part of a lower temperature part 4 of the heat exchanger 3. Such a thermally conductive member is connected to, for example, a heat source with a relatively low temperature as described above. Such a thermally conductive member transfers heat, for example, from a central part of the lower temperature part 4 of the heat exchanger 3 to a heat source with a relatively low temperature, so that it is possible to lower a temperature of the lower temperature part 4 of the heat exchanger 3.

Alternatively, the thermoacoustic device 1 may include a thermally conductive member that changes a temperature of a central part of the lower temperature part 4 of the heat exchanger 3 and a thermally conductive member that changes a temperature of a central part of the higher temperature part 5 thereof.

FIG. 4 is a diagram that illustrates an example of a temperature gradient holding part 6 of a heat exchanger 3 that is included in a thermoacoustic device 1 according to an embodiment. As illustrated in FIG. 4, the temperature gradient holding part 6 of the heat exchanger 3 has, for example, a substantially cylindrical shape.

A length of the temperature gradient holding part 6 of the heat exchanger 3 in a direction of a central axis thereof (an X-axis direction) is, for example, 1 cm or greater and 2 cm or less. In such a case, it is possible to obtain an effective output of acoustic energy of a sound wave(s) that is converted from thermal energy of the temperature gradient holding part 6 by obtaining an amplitude of a sound wave(s) with an effective magnitude.

The temperature gradient holding part 6 of the heat exchanger 3 has, for example, a plurality of fins 6a that are orthogonal to a direction of a central axis thereof (an X-axis direction) and are parallel to one another. The temperature gradient holding part 6 of the heat exchanger 3 has, for example, a plurality of partitions 6b that are provided between the plurality of fins 6a.

The plurality of fins 6a and the plurality of partitions 6b are formed of, for example, a ceramic or glass with a low thermal conductivity. In such a case, it is possible to decrease a thermal conductivity of the plurality of fins 6a and the plurality of partitions 6b. Hence, it is possible to decrease reduction of a temperature gradient at the temperature gradient holding part 6 of the heat exchanger 3. Accordingly, it is possible for the temperature gradient holding part 6 to hold a temperature gradient that is produced between a lower temperature part 4 and a higher temperature part 5 of the heat exchanger 3 well.

A ceramic that forms the plurality of fins 6a and the plurality of partitions 6b is, for example, zirconia, titania, or steatite. In such a case, it is possible to decrease a thermal conductivity at the plurality of fins 6a and the plurality of partitions 6b with respect to a thermal conductivity from the plurality of fins 6a and the plurality of partitions 6b to a gas G well. Hence, it is possible for the temperature gradient holding part 6 to improve thermal conductance from the plurality of fins 6a and the plurality of partitions 6b to the gas G. Accordingly, it is possible for the temperature gradient holding part 6 to readily hold a desired temperature gradient between the lower temperature part 4 and the higher temperature part 5 of the heat exchanger 3.

A thickness of the plurality of fins 6a is, for example, 100 µm or less. A gap between the plurality of fins 6a is, for example, 0.4 mm or greater and 1.5 mm or less. A thickness of the plurality of partitions 6b and a gap between the plurality of partitions 6b are determined appropriately. In a case where a material of the plurality of partitions 6b is identical to that of the plurality of fins 6a, integral shaping or fabrication thereof may be executed.

Although a waveguide 2 is filled with a gas G in a thermoacoustic device 1 according to an embodiment, a waveguide 2 may be filled with a medium other than a gas G. For example, a waveguide 2 may be filled with a liquid as long as a sound wave(s) is/are produced and amplified effectively.

Although a waveguide 2 has a single loop shape in a thermoacoustic device 1 according to an embodiment, a waveguide 2 may have, for example, a plurality of loop shapes that are connected by at least one pipe. In such a case, a thermoacoustic device 1 may have a plurality of converters 8 at an identical loop or different loops of a waveguide 2.

Although a gas G that fills a waveguide 2 is oscillated or excited by an exciter 7 in a thermoacoustic device 1 according to an embodiment, a thermoacoustic device 1 does not have to include an exciter 7.

In such a case, as a temperature gradient is produced between a lower temperature part 4 and a higher temperature part 5 of a heat exchanger 3, a sound wave(s) is/are produced in a gas G while 1/f noise that exists in a waveguide 2 is a sound source. A sound wave(s) that is/are produced in a gas G is/are amplified by a temperature gradient that is produced between a lower temperature part 4 and a higher temperature part 5 of a heat exchanger 3 and stably resonate(s) in a waveguide 2.

Thus, even in a case where a thermoacoustic device 1 does not include an exciter 7, it is possible for the thermoacoustic device 1 to convert, for example, thermal energy that is supplied to a heat exchanger 3 into acoustic energy of a sound wave(s) that is/are produced in a gas G.

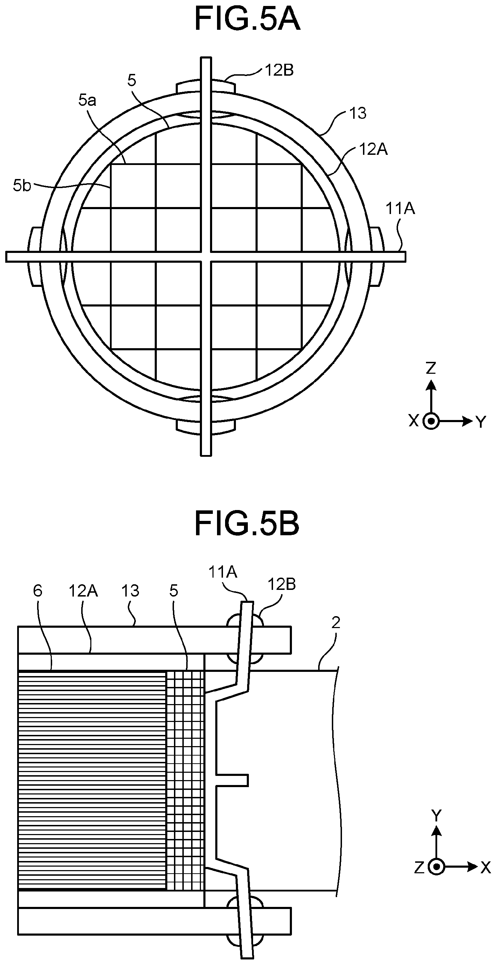

FIG. 5A and FIG. 5B are diagrams that illustrate another example of a higher temperature part 5 of a heat exchanger 3 and a thermally conductive member 11 (a thermally conductive member 11A) that are included in a thermoacoustic device 1 according to an embodiment. The higher temperature part 5 of the heat exchanger 3 as illustrated in FIG. 5A and FIG. 5B has a configuration that is similar to a configuration of a higher temperature part 5 of a heat exchanger 3 as illustrated in FIG. 2A and FIG. 2B. The thermally conductive member 11A as illustrated in FIG. 5A and FIG. 5B has a configuration that is similar to a configuration of a thermally conductive member 11 as illustrated in FIG. 2A and FIG. 2B.

However, the higher temperature part 5 of the heat exchanger 3 as illustrated in FIG. 5A and FIG. 5B is inserted into a hollow pipe 13. The thermally conductive member 11A as illustrated in FIG. 5A and FIG. 5B is a member that extends through a hole that is provided on the hollow pipe 13.

The hollow pipe 13 covers at least an outer circumference of a lower temperature part 4, a temperature gradient holding part 6, and the higher temperature part 5 of the heat exchanger 3. That is, at least the lower temperature part 4, the temperature gradient holding part 6, and the higher temperature part 5 of the heat exchanger 3 are inserted into the hollow pipe 13.

The hollow pipe 13 seals at least the lower temperature part 4, the temperature gradient holding part 6, and the higher temperature part 5 of the heat exchanger 3 in order to reduce leaking of a gas G that moves in the heat exchanger 3, from the heat exchanger 3. The hollow pipe 13 reduces oxidizing of at least the higher temperature part 5 and the lower temperature part 4 that have a plurality of fins 5a, 5b by surrounding air.

A material of the hollow pipe 13 is preferably a material with a low thermal conductivity in order to decrease a change in a temperature of each of the lower temperature part 4, the temperature gradient holding part 6, and the higher temperature part 5 of the heat exchanger 3. A material of the hollow pipe 13 is, for example, a plastic material such as vinyl chloride.

As illustrated in FIG. 5A and FIG. 5B, a heat insulation member 12A is provided between the lower temperature part 4 (see FIG. 1), the temperature gradient holding part 6, and the higher temperature part 5 of the heat exchanger 3 and the hollow pipe 13. That is, the heat insulation member 12A is provided so as to cover an outer circumference of the lower temperature part 4, the temperature gradient holding part 6, and the higher temperature part 5 of the heat exchanger 3 and cover an inner circumference of the hollow pipe 13.

The heat insulation member 12A decreases thermal conductance between the lower temperature part 4, the temperature gradient holding part 6, and the higher temperature part 5 of the heat exchanger 3 and the hollow pipe 13 in order to decrease a change in a temperature of each of the lower temperature part 4, the temperature gradient holding part 6, and the higher temperature part 5 of the heat exchanger 3.

The heat insulation member 12A is, preferably, a material that has a resistance to a high temperature of about 300 °C. A material of the heat insulation member 12A is, for example, a ceramic fiber(s), a rock wool fiber(s), or the like.

As illustrated in FIG. 5A and FIG. 5B, the thermally conductive member 11A that extends through a hole that is provided on the hollow pipe 13 is fixed to the hollow pipe 13 by a heat insulation member 12B. The heat insulation member 12B is provided on a surface(s) (for example, an outer surface and an inner surface) of the hollow pipe 13 near a position where the thermally conductive member 11A is inserted into a hole that is provided on the hollow pipe 13.

The heat insulation member 12B decreases thermal conductance between the thermally conductive member 11A and the hollow pipe 13 in order to decrease a change in a temperature of the thermally conductive member 11A. The heat insulation member 12B seals a hole that is provided on the hollow pipe 13 in order to reduce leaking of the gas G that moves in the heat exchanger 3 from a hole of the hollow pipe 13 that is provided in order to insert the thermally conductive member 11A therein.

The heat insulation member 12B is, preferably, a material that has a resistance to a high temperature of about 300 °C. A material of the heat insulation member 12B is, for example, a ceramic adhesive or the like.

As illustrated in FIG. 5A and FIG. 5B, at least a part of the thermally conductive member 11A is connected to one fin 5a that composes the higher temperature part 5 of the heat exchanger 3 and one fin 5b that is orthogonal to the one fin 5a. At least a part of the thermally conductive member 11A is aligned with the one fin 5a and the one fin 5b.

As illustrated in FIG. 5A, the higher temperature part 5 of the heat exchanger 3 has an odd number of (for example, five) fins 5a in one direction (for example, a Y-axis direction) that is orthogonal to a direction of a central axis of the higher temperature part 5 of the heat exchanger 3 (an X-axis direction). The higher temperature part 5 of the heat exchanger 3 has an odd number of (for example, five) fins 5b in a direction (for example, a Z-axis direction) that is orthogonal to both a direction of a central axis of the higher temperature part 5 of the heat exchanger 3 (an X-axis direction) and one direction (for example, a Y-axis direction) that is orthogonal thereto. In such a case, as illustrated in FIG. 5A and FIG. 5B, at least a part of the thermally conductive member 11A is connected to central fins 5a, 5b so as to be aligned with the central fins 5a, 5b that are positioned near a central axis of the higher temperature part 5 of the heat exchanger 3.

For a method for connecting the thermally conductive member 11A to one fin 5a, 5b that composes the higher temperature part 5 of the heat exchanger 3, it is possible to provide, for example, a method for connecting the thermally conductive member 11A to the one fin 5a, 5b by using a solder or the like, a method for laser-bonding the thermally conductive member 11A to the one fin 5a, 5b, or the like.

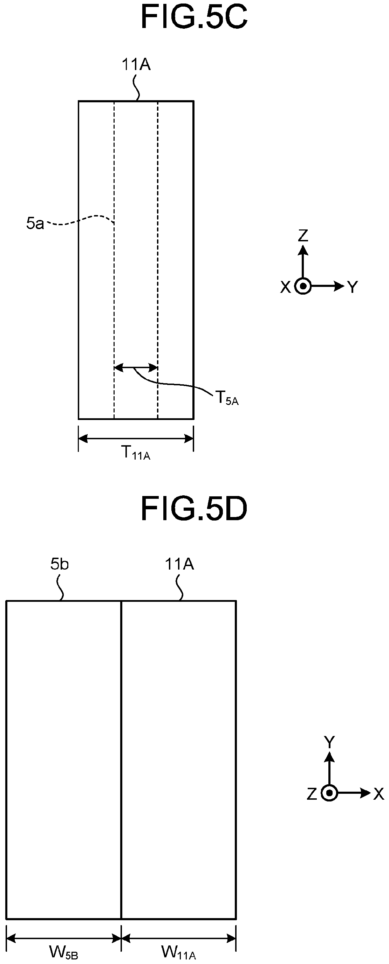

FIG. 5C is a diagram that illustrates a relationship between a thickness of a fin 5a that composes a higher temperature part 5 of a heat exchanger 3 that is included in a thermoacoustic device 1 according to an embodiment and a thickness of a thermally conductive member 11A therein. FIG. 5D is a diagram that illustrates a relationship between a width of a fin 5b that composes a higher temperature part 5 of a heat exchanger 3 that is included in a thermoacoustic device 1 according to an embodiment and a width of a thermally conductive member 11A therein.

As illustrated in FIG. 5C, in a direction (for example, a Y-axis direction) that is orthogonal to a direction of a central axis of the higher temperature part 5 of the heat exchanger 3 (an X-axis direction), a thickness T_{11A} of the thermally conductive member 11A is about two to three times a thickness T_{5A} of a central fin 5a. For example, if a thickness T_{5A} of the central fin 5a is about 2 mm, a thickness T_{11A} of the thermally conductive member 11A is about 4 mm to 6 mm.

As illustrated in FIG. 5D, in a direction of a central axis of the higher temperature part 5 of the heat exchanger 3 (an X-axis direction), a width W_{11A} of the thermally conductive member 11A is substantially identical to a width W_{5B} of a central fin 5b. For example, if a width W_{5B} of the central fin 5b is about 5 mm, a width W_{11A} of the thermally conductive member 11A is also about 5 mm.

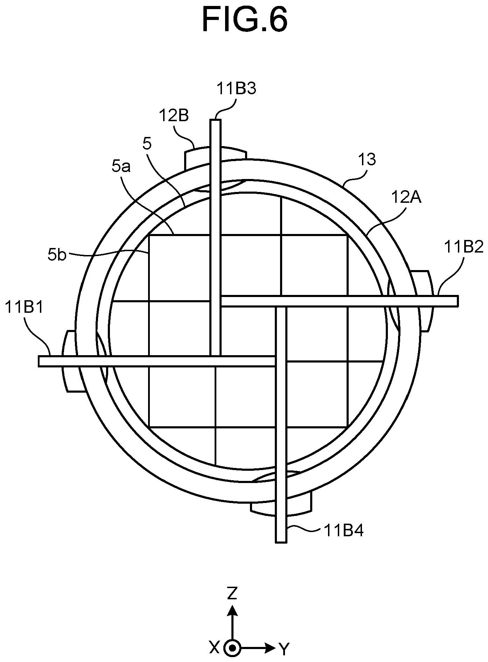

FIG. 6 is a diagram that illustrates yet another example of a higher temperature part 5 of a heat exchanger 3 and a thermally conductive member 11 (thermally conductive members 11B1, 11B2, 11B3, 11B4) that are included in a thermoacoustic device 1 according to an embodiment. The higher temperature part 5 of the heat exchanger 3 as illustrated in FIG. 6 has a configuration that is similar to a configuration of a higher temperature part 5 of a heat exchanger 3 as illustrated in FIG. 5A.

However, a number of a fin(s) that is/are included in the higher temperature part 5 of the heat exchanger 3 as illustrated in FIG. 6 is different from a number of a fin(s) that is/are included in the higher temperature part 5 of the heat exchanger 3 as illustrated in FIG. 5A. A configuration of the thermally conductive members 11B1, 11B2, 11B3, 11B4 as illustrated in FIG. 6 is different from a configuration of a thermally conductive member 11A as illustrated in FIG. 5A.

As illustrated in FIG. 6, at least a part of each of the thermally conductive members 11B1, 11B2 is connected to one fin 5a that composes the higher temperature part 5 of the heat exchanger 3. At least a part of each of the thermally conductive members 11B1, 11B2 is aligned with the one fin 5a. At least a part of each of the thermally conductive members 11B3, 11B4 is connected to one fin 5b that is orthogonal to the one fin 5a and composes the higher temperature part 5 of the heat exchanger 3. At least a part of each of the thermally conductive members 11B3, 11B4 is aligned with the one fin 5b.

As illustrated in FIG. 6, the higher temperature part 5 of the heat exchanger 3 has an even number of (for example, four) fins 5a in one direction (for example, a Y-axis direction) that is orthogonal to a direction of a central axis of the higher temperature part 5 of the heat exchanger 3 (an X-axis direction). The higher temperature part 5 of the heat exchanger 3 has an even number of (for example, four) fins 5b in a direction (for example, a Z-axis direction) that is orthogonal to both a direction of a central axis of the higher temperature part 5 of the heat exchanger 3 (an X-axis direction) and one direction (for example, a Y-axis direction) that is orthogonal thereto. In such a case, as illustrated in FIG. 5A and FIG. 5B, at least a part of the thermally conductive member 11A is connected to central fins 5a, 5b so as to be aligned with the central fins 5a, 5b that are positioned near a central axis of the higher temperature part 5 of the heat exchanger 3.

In such a case, as illustrated in FIG. 6, at least a part of each of the thermally conductive members 11B1, 11B2 is connected to a part of a fin 5a near a center thereof so as to be aligned with a part of the fin 5a near a center thereof that is positioned so as to be closest to a central axis of the higher temperature part 5 of the heat exchanger 3. At least a part of each of the thermally conductive members 11B3, 11B4 is connected to a part of a fin 5b near a center thereof so as to be aligned with a part of the fin 5b near a center thereof that is positioned so as to be closest to a central axis of the higher temperature part 5 of the heat exchanger 3.

It is possible for a person(s) skilled in the art to readily derive an additional effect(s) and/or variation(s). Hence, a broader aspect(s) of the present invention is/are not limited to a specific detail(s) and a representative embodiment(s) as illustrated and described above. Therefore, various modifications are possible without departing from the spirit or scope of a general inventive concept that is defined by the appended claim(s) and an equivalent(s) thereof.

### Reference Signs List

1 thermoacoustic device
2 waveguide
3 heat exchanger
4 lower temperature part
5 higher temperature part
5a, 5b fin
6 temperature gradient holding part
6a fin
6b partition
7 exciter
8 converter
11, 11a, 11b, 11c, 11d, 11A, 11B1, 11B2, 11B3, 11B4 thermally conductive member
12, 12A, 12B heat insulation member
13 hollow pipe
G gas

## Claims

1. A thermoacoustic device, comprising:
a waveguide with a loop shape that is filled with a medium;
a heat exchanger that is provided in the waveguide and has a lower temperature part and a higher temperature part that produce a temperature gradient therebetween; and
a thermally conductive member that changes a temperature of a central part of at least one of the lower temperature part and the higher temperature part.

2. The thermoacoustic device according to claim 1, wherein
the thermally conductive member is provided to be rotationally symmetric with respect to a central axis of at least one of the lower temperature part and the higher temperature part.

3. The thermoacoustic device according to claim 2, wherein
the thermally conductive member is a member that extends in two directions that are orthogonal to a direction of a central axis of at least one of the lower temperature part and the higher temperature part and are orthogonal to one another.

4. The thermoacoustic device according to any one of claims 1 to 3, wherein
the thermally conductive member is a member that extends to at least a center of at least one of the lower temperature part and the higher temperature part.

5. The thermoacoustic device according to any one of claims 1 to 4, further comprising
a heat insulation member that reduces thermal conduction between the thermally conductive member and the waveguide at a position where the thermally conductive member contacts the waveguide.

6. The thermoacoustic device according to any one of claims 1 to 5, wherein
the heat exchanger further has a temperature gradient holding part that is provided between the lower temperature part and the higher temperature part and holds the temperature gradient.

7. The thermoacoustic device according to any one of claims 1 to 6, wherein
the thermally conductive member is a member that is connected to at least one fin that composes at least one of the lower temperature part and the higher temperature part to be aligned with the at least one fin.
